# EUROPEAN PATENT APPLICATION

(11) **EP 2 109 297 A1**
(43) Date of publication of application: **14.10.2009**
(21) Application number: 09156719.8
(22) Date of filing: 30.03.2009
(51) Int. Cl.: H04M 1/725, G06F 3/048

(54) **Mobile terminal and method for controlling widget arrangement on standby screen**

(30) Priority: 10.04.2008 KR 20080033006
(71) Applicant: Pantech Co., Ltd., Seoul 121-792 (KR)
(72) Inventor: Ban, Yoong Jin, 120-030, Seoul (KR)
(74) Representative: Herzog, Markus

(57) **Abstract**

A mobile terminal and includes a standby screen for displaying widgets. Basic arrangement information of the widgets is set to arrange selected widgets on the standby screen. Then, the widgets selected for a standby screen are parsed, and the widgets are loaded to a standby screen of the touch-screen panel according to the basic arrangement information. If a touch input is made to the touch-screen panel in which the widgets are loaded, the arrangement of the widgets on the standby screen is changed in various ways, such as dragged, minimized, or restored to an initial arrangement according to the kind, location, and duration of the touch input.

## Description

### CROSS-REFERENCE TO RELATED APPLICATION

This application claims priority from and the benefit of Korean Patent Application No. 10-2008-0033006, filed on April 10, 2008, which is hereby incorporated by reference for all purposes as if fully set forth herein.

### BACKGROUND OF THE INVENTION

FIELD OF THE INVENTION

The present invention relates to a mobile terminal and a method for controlling a standby screen of the same, and in particular, a mobile terminal and a method for controlling a display arrangement of widget contents on a standby screen of the same.

DISCUSSION OF THE BACKGROUND

The demand for mobile terminals such as cellular phones, MP3 players, portable multimedia player (PMP), digital multimedia broadcasting (DMB) receivers, camcorders, and digital cameras continues to increase.

Together with the increased demand for mobile terminals, improvements are being made on the quality and variety of services provided through the mobile terminals. For example, content providers continue to offer various new and additional services to meet user demand.

One of the services applicable to mobile terminals is a standby screen service.

The standby screen service displays content such as user-selected text, images, or multimedia on a standby screen of a mobile terminal. Since a user selects standby screen content according to the user's individual taste, the terminal user may decorate the mobile terminal in an individual way.

However, with the existing standby screen service, a terminal user is substantially prohibited from editing or rearranging data provided by a content provider on the terminal. Also, it is difficult to apply multiple types of content to one standby screen. So, there is a limitation in how a user may configure a standby screen according to the user's personal taste or requirements.

Thus, a scheme is needed for allowing a user to more easily reconfigure a standby screen with various contents according to the terminal user's personal preference, while overcoming an existing contents provider-oriented passive standby screen service.

In particular, in the current situation where a standby screen is considered more important and used more frequently, a scheme that allows a user to set a user-oriented standby screen is required.

The above information disclosed in this Background section is only for enhancement of understanding of the background and therefore it may contain information that does not form the existing art that is already known in this country to a person of ordinary skill in the art.

### SUMMARY OF THE INVENTION

This invention provides a mobile terminal having a customizable widget-type standby screen where the widget arrangement on the standby screen may be edited by a touch-screen panel.

This invention also provides a method for customizing a mobile terminal standby screen by controlling a widget arrangement on the standby screen using a touch-screen panel.

Additional features of the invention will be set forth in the description which follows, and in part will be apparent from the description, or may be learned by practice of the invention.

The present invention discloses a mobile terminal including a touch-screen panel, a state setting unit to store basic arrangement information for a plurality of widgets; a widget operating unit to receiving the basic arrangement information, to parse the plurality of widgets , and to load the plurality of widgets on a standby screen of the touch-screen panel according to the basic arrangement information; and a widget arranging unit to determine a current display state of the standby screen and a kind of a touch input if the touch input is made to the touch-screen panel, to change the current display state of the standby screen to an updated display state according to the determination result by controlling the widget operating unit, and to control the state setting unit to store arrangement information for the updated display state.

The present invention also discloses a method for controlling a standby screen of a mobile terminal having a touch-screen panel, the method comprising selecting a plurality of widgets and setting basic arrangement information for the plurality of widgets; parsing the plurality of widgets and loading the plurality of widgets to a standby screen of the touch-screen panel according to the basic arrangement information; and if a touch input is made to the touch-screen panel, determining a current display state of the standby screen and a kind of the touch input, changing the current display state of the plurality of widgets on the standby screen according to the determination result to an updated display state, and storing changed arrangement information for the updated display state.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 shows a configuration of a mobile terminal according to an exemplary embodiment of the present invention.

FIG. 2 shows an example of a screen of the mobile terminal shown in FIG. 1.

FIG. 3 is a flowchart illustrating a method for controlling a standby screen of a mobile terminal according to an exemplary embodiment of the present invention.

FIG. 4 shows an example of an initial state, a first rearranged state, and a second rearranged state of the standby screen according to the embodiment shown in FIG. 3.

FIG. 5 shows an example of a standby screen to illustrate a process of changing an arrangement state of widget contents according to the embodiment shown in FIG. 3.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Hereinafter, various embodiments according to the present invention will be described in detail with reference to the accompanying drawings.

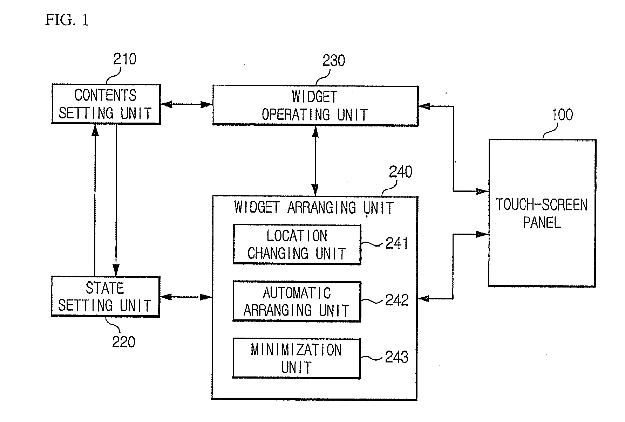

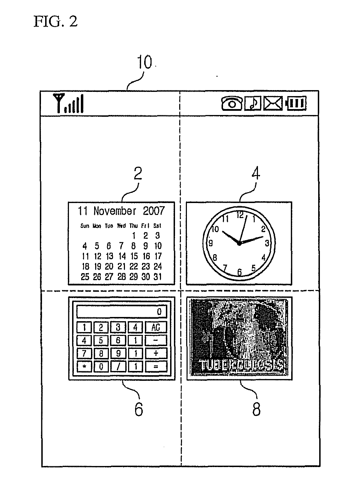

FIG. 1 shows a configuration of a mobile terminal according to an exemplary embodiment of the present invention, and FIG. 2 shows an example of a screen of the mobile terminal shown in FIG. 1.

Preferring to FIG. 1, the mobile terminal includes a touch-screen panel 100, a contents setting unit 210, a state setting unit 220, a widget operating unit 230, and a widget arranging unit 240.

The touch-screen panel 100 is a display panel using a touch of a user as an input pointer, and it provides a graphic user interface (GUI) between a user and an operating system or between a user and an application executed on the operating system. The GUI of the touch-screen panel 100 displays a program, a file, or a motion option as a graphic image. The graphic images useable therein include windows, fields, dialog boxes, menus, icons, buttons, cursors, scroll bars, and so on.

A user may activate a function or work connected to various graphic images by selecting the corresponding image. For example, a user may select a button for opening, closing, minimizing, or maximizing a window or an icon for executing a certain program.

Movement of the input pointer on the touch-screen panel 100 corresponds to a relative movement of a user finger or a touch pen if the user finger or touch pen selects a graphic image on the touch-screen panel 100 or drags it from one location to another location on the touch-screen panel 100.

The contents setting unit 210 stores widgets selected for a standby screen, and the contents setting unit 210 customizes the mobile terminal by adding or deleting at least one widget on the standby screen according to the control of the widget operating unit 230.

As used herein, the term "widget" refers to a small GUI tool that operates an application executed on an operating system of the mobile terminal and displays an operation result on a screen. "Widget" may be synonymously referred to as "widget content" or "mobile widget."

The mobile terminal displays widgets, downloaded via the Internet or already stored in the terminal, on a screen into a small window format. The widgets may allow a user to use various functions otherwise provided by an Internet browser such as a clock, a calendar, a memo pad, a search, a map, news, and a real-time camera, without requiring the user to open an Internet browser.

The state setting unit 220 stores basic arrangement information of the widgets selected for a standby screen and changed arrangement information for widgets whose locations are changed by a user on the standby screen.

The widget operating unit 230 receives the basic arrangement information from the state setting unit 220 and receives and parses the widgets selected for a standby screen from the contents setting unit 210, and then the widget operating unit 230 loads the widgets and displays them on the standby screen of the touch-screen panel 100 according to the basic arrangement information that defines the initial locations of the widgets on the standby screen.

FIG. 2 shows a default arrangement of widgets in which the widgets are arranged in an initial state. As shown, four widgets, namely a calendar 2, a clock 4, a calculator 6 and media 8, are displayed on a standby screen 10. In the initial state at which the widgets 2, 4, 6, 8 are arranged according to the basic arrangement information, the widgets may be arranged about the center of the screen 10.

The maximum number of widgets displayable on a standby screen may be set according to the screen size.

A user may set various widgets such as news, weather and stock information as a standby screen as desired, and the user may easily change the configuration format of the standby screen by adding, deleting, changing, moving or automatically arranging (or minimizing) the widgets.

For example, if a user touches one widget on a screen of the touch-screen panel 100 and taps the widget, the widget operating unit 230 enlarges the tapped widget to provide detailed functions for the tapped widget. Also, if a one widget is long-tapped for an extended time (for example, 3 seconds), the widget operating unit 230 enters a widget manager mode in which the setting of the long-tapped widget may be changed.

The widget arranging unit 240 determines the display state of the standby screen 10 and the kind of touch input when a touch input is made to the touch-screen panel 100. Also, according to the determination result, the widget arranging unit 240 controls the widget operating unit 230 to change a display state of the standby screen 10, and stores changed arrangement information for the display state to the state setting unit 220.

This widget arranging unit 240 includes a location changing unit 241, an automatic arranging unit 242, and a minimization unit 243.

If one widget is dragged, the location changing unit 241 moves the location of the dragged widget to rearrange the widget.

Here, the location changing unit 241 is controlled to move each widget only within a predetermined ratio (for example, 50%), based on a screen contour of an initial location arranged according to the basic arrangement information, such that each widget does not move completely out of the standby screen 10.

In the rearrangement state at which widgets are displayed differently from the basic arrangement information, if a user double-taps a margin region of the standby screen 10, the automatic arranging unit 242 automatically arranges the widgets according to the basic arrangement information to recover their initial locations.

In the initial state in which the widgets are displayed according to the basic arrangement information, if a user double-taps a margin region of the standby screen 10, the minimization unit 243 minimizes the widgets to smaller icons and arranges them.

As mentioned above, a user-oriented mobile terminal is provided that integrates various applications of the mobile terminal provided with the touch-screen panel 100, and that allows a user to execute various functions in an easier way by manipulating the arrangement of the widgets on a standby screen. A user may create or delete a widget on the standby screen by using the touch-screen panel 100 to receive a touch input, and also the user may set a desired environment by more freely moving or arranging widgets in the screen.

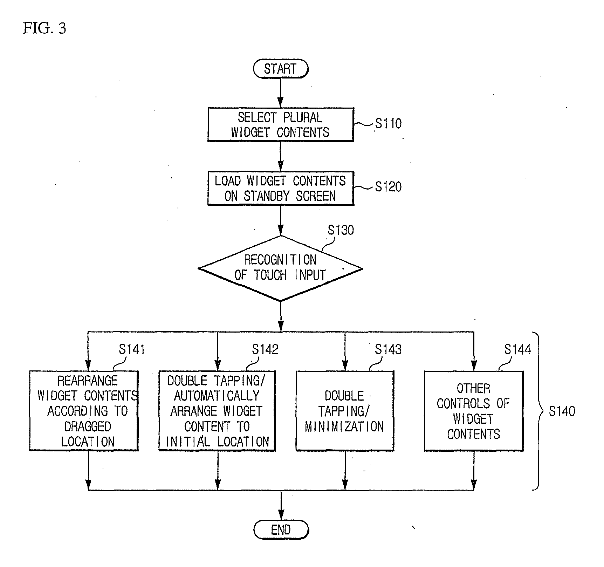

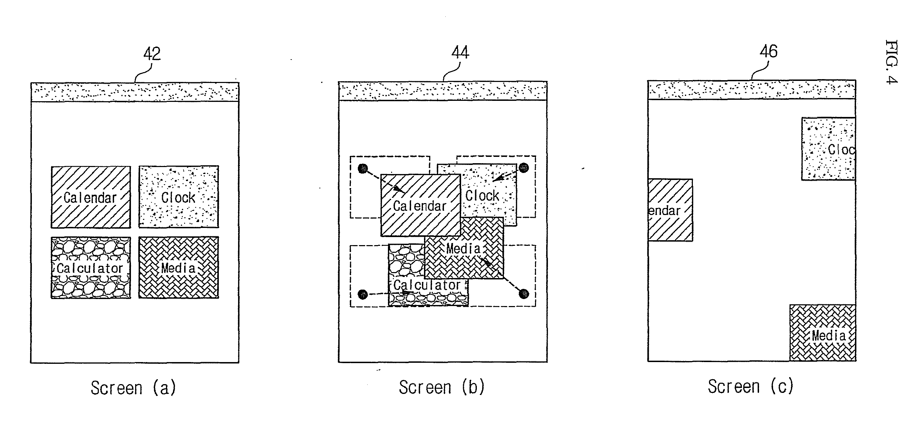

Hereinafter, an embodiment of a method for controlling a standby screen of a mobile terminal is explained in detail with reference to FIG. 3, FIG. 4, and FIG..

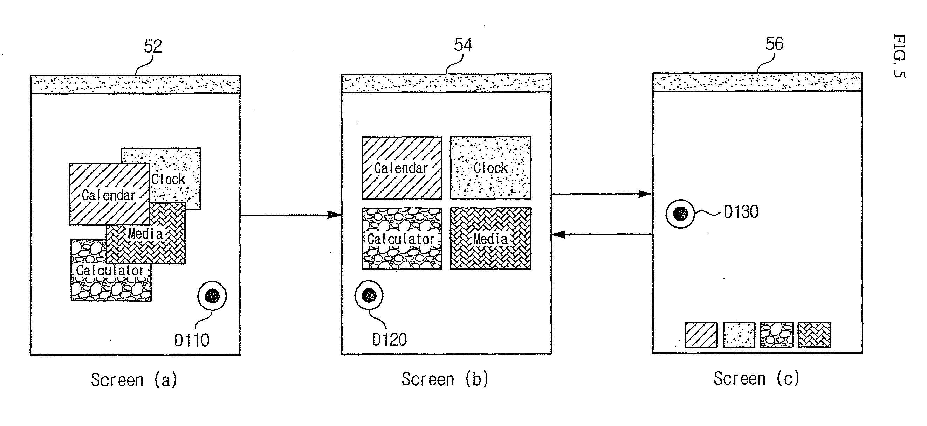

FIG. 3 is a flowchart illustrating a method for controlling a standby screen of a mobile terminal according to an exemplary embodiment of the present invention. FIG. 4 and FIG. 5 show examples of a screen to illustrate some processes of the control method of FIG. 3.

First, in step S110, a user manipulates the touch-screen panel 100 of a mobile terminal to select widgets to be displayed on a standby screen, and then sets basic arrangement information for the selected widgets. The widgets selected for the standby screen and their basic arrangement information are stored in the mobile terminal.

Then, in step S120, the mobile terminal reads the widgets selected for the standby screen and parses them, and then loads the selected widgets into the standby screen of the touch-screen panel 100 according to the basic arrangement information.

After that, in step S130, if the user enters a touch input to the touch-screen panel 100, the mobile terminal determines the kind of touch input, the location of the touch input, and the current display state of the widgets displayed on the standby screen of the touch-screen panel 100.

The kind of touch input may be classified into a touch input for dragging or moving a widget along the standby screen, a tap executed by a single touch on the screen, a double tap executed by two successive touches on the screen, and a long tap executed by long touch having an extended duration on the screen. The extended duration of the long tap may be about three seconds, but is not limited thereto. More specifically, the extended duration may be set by the user, and may be classified as a period of time that is longer than a duration of time set by the user for the tap executed by single touch. The display state is classified into an initial state in which the widgets are arranged into initial locations according to the basic arrangement information, an arrangement state in which at least one widget is arranged in a location other than its location according to the basic arrangement information, and a minimization state in which the widgets are minimized and arranged at a certain location.

Then, in step S140, the mobile terminal changes a display state of the widgets on the standby screen according to the determination result of step S130, and stores the changed arrangement information for the display state.

Step S140 may be divided into steps S141, S142, S143, and S144.

If the user drags one widget on the screen, the mobile terminal executes step S141 to change the location of the dragged widget and rearrange the widget according to a dragged location.

In FIG. 4, the screens (a) to (c) show examples of the initial state, a first rearrangement state, and a second rearrangement state of the standby screen, respectively.

As shown in FIG. 4, the user may change the screen of the mobile terminal from the screen (a) in the initial state to the screen (b) by moving a widget by dragging on the surface of the touch-screen panel 100.

As shown on screen (c) of FIG. 4, each widget has a limitation value in movement within a predetermined range (for example, 50%) based on a screen contour. Namely, the widgets on the standby screen are controlled to be movable within a limited range of a predetermined ratio (for example, 50%) based on the screen contour of the initial locations arranged according to the basic arrangement information.

For example, a widget may not be overlapped if less than 50% of its area would remain on the standby screen in the overlapping condition, and a widget may not move to a new location if less than 50% of its area would remain on the standby screen.

If the widgets are displayed differently from the basic arrangement information, and a user double taps a margin region except for the background area where the widgets are displayed, the mobile terminal executes step S142 to automatically rearrange the widgets according to the basic arrangement information such that the widget contents are restored back to their initial locations.

If the widgets are displayed according to the basic arrangement information, and a user double taps on the margin region, the mobile terminal executes step S143 to minimize and rearrange the locations of the widget contents.

FIG. 5 shows screens (a) to (c), which illustrate examples of the steps S141, S142, and S143, respectively.

In the screen (a) where widgets are arranged to partially overlap, if a user double taps on a margin region D110 in the standby screen to rearrange the overlapped widgets, the widgets may be restored to the initial locations as shown in the screen (b). In the screen (b), if the user wishes to minimize and rearrange the widgets, the user may double tap on a margin region D120 again and the widgets are minimized and rearranged as minimized icons as shown in the screen (c).

Meanwhile, if the user double taps on a margin region D130 in the screen (c) where the widgets are minimized, the widgets may be restored to their arrangements and sizes from screen (b) that is in the initial state or the pre-minimization state.

As mentioned above, a user may more easily arrange and rearrange widgets on a standby screen by using touch inputs made to the touch-screen panel 100 and the widget-type standby screen.

The above procedure will be explained again with reference to FIG. 4 and FIG. 5. First, in FIG. 4, the basic arrangement information contains widget arrangement values of the initial state as shown in the screen (a), and each widget may be dragged to change its location freely as shown in the screen (b). At the movement, each widget has a limitation value for movement corresponding to a predetermined ratio (for example, 50%) of a widget size based on the screen contour as shown in the screen (c), so it is possible to prevent widgets from disappearing out of the screen.

In addition, freely moved widgets may be more easily restored to their initial locations as understood from the screens (a) and (b) of FIG. 5. If a user wants to minimize and arrange widgets, the user may arrange widgets into smallest sizes as shown in the screen (c) of FIG. 5 by a simple double-tapping action. Also, in the minimization state, the user may more easily restore the widgets back to their initial state by double tapping the margin region.

If there is a touch input, and the display state of the mobile terminal and the kind of touch input do not coincide with the conditions of the steps S141, S142, or S143, the mobile terminal executes step S144 to control the widgets according to operations corresponding to the touch input.

For example, in step S144, if a user intends to add or delete at least one widget on the standby screen by making a touch input, the mobile terminal rearranges widgets corresponding to the user manipulation, thereby customizing the standby screen.

Since widgets to be loaded on the standby screen may be newly generated, deleted, or changed by the user selection, the user may personally customize and decorate the standby screen of the mobile terminal differentially from others.

In another case, if a user taps one widget on the screen of the touch-screen panel 100, the mobile terminal may enlarge the tapped widget such that the user may use detailed functions of the tapped widget.

In another case, if a user long-taps one widget for an extended time (for example, 3 seconds), the mobile terminal enters a widget manager mode in which the user may change the setting of the tapped widget such that the user may use the corresponding function.

As mentioned above, a user may select widgets to configure a standby screen as desired, move or arrange each widget in the standby screen to a desired location, and freely use user environments in the standby screen status.

Since a user may more easily restore widgets to initial locations or change a display state by a simple action such as double tapping, the user may customize the standby screen according to individual tastes and more conveniently customize the standby screen.

Description was made in detail with reference to exemplary embodiments of the present invention. However, it will be appreciated by those skilled in the art that changes may be made in these embodiments without departing from the principles and spirit of the mobile terminal disclosed herein.

The mobile terminal and the method for controlling a standby screen of a mobile terminal, disclosed above, may be usefully applied to a mobile terminal providing a standby screen service.

Also, the mobile terminal and the method for controlling a standby screen of a mobile terminal, disclosed above, may provide various kinds of information through the standby screen, improve aesthetic feeling, and allow a user to control a configuration format of the standby screen with widgets in a more easy and more efficient way.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A mobile terminal, comprising:
a touch-screen panel;
a state setting unit to store basic arrangement information for a plurality of widgets;
a widget operating unit to receiving the basic arrangement information, to parse the plurality of widgets, and to load the plurality of widgets on a standby screen of the touch-screen panel according to the basic arrangement information; and
a widget arranging unit to determine a current display state of the standby screen and a kind of a touch input if the touch input is made to the touch-screen panel, to change the current display state of the standby screen to an updated display state according to the determination result by controlling the widget operating unit, and to control the state setting unit to store arrangement information for the updated display state.

2. The mobile terminal of claim 1,
wherein the widget arranging unit comprises a location changing unit, and if a first widget is dragged according to the touch input, the location changing unit changes a location of the first widget.

3. The mobile terminal of claim 1 or 2,
wherein the widget arranging unit comprises an automatic arranging unit, and if a double tap touch input is made to a margin region while the plurality of widgets are arranged differently from the basic arrangement information, the automatic arranging unit automatically arranges the plurality of widgets according to the basic arrangement information.

4. The mobile terminal of one of claims 1 to 3,
wherein the widget arranging unit comprises a minimization unit, and if a double tap touch input is made to a margin region while the plurality of widgets are arranged according to the basic arrangement information, the minimization unit minimizes and arranges the plurality of widget contents.

5. The mobile terminal of one of claims 1 to 4,
further comprising a contents setting unit to store the plurality of widgets and to add a new widget to or to delete one of the plurality of widgets from the standby screen according to a control of the widget operating unit if the touch input is made to the touch-screen panel.

6. The mobile terminal of one of claims 1 to 5,
wherein, if a first widget is tapped as the touch input, the widget operating unit enlarges the first widget and provides detailed functions of the first widget.

7. The mobile terminal of one of claims 1 to 6,
wherein, if a first widget is long tapped over a predetermined time as the touch input, the widget operating unit enters a widget manager mode to allow a user to change a setting of the first widget.

8. The mobile terminal of one of claims 2 to 7,
wherein the widgets on the standby screen are movable within a predetermined ratio range based on a screen contour of the initial locations according to the basic arrangement information.

9. A method for controlling a standby screen of a mobile terminal having a touch-screen panel, the method comprising:
selecting a plurality of widgets and setting basic arrangement information for the plurality of widgets;
parsing the plurality of widgets and loading the plurality of widgets to a standby screen of the touch-screen panel according to the basic arrangement information; and
if a touch input is made to the touch-screen panel, determining a current display state of the standby screen and a kind of the touch input, changing the current display state of the plurality of widgets on the standby screen according to the determination result to an updated display state, and
storing changed arrangement information for the updated display state.

10. The method of claim 9,
wherein changing the current display state comprises dragging a first widget to an updated location that does not correspond to the basic arrangement information for the first widget, the plurality of widgets on the standby screen preferably being movable within a predetermined ratio range based on a screen contour of the initial locations according to the basic arrangement information.

11. The method of claim 9 or 10,
wherein if the plurality of widgets are displayed differently from the basic arrangement information, changing the current display state comprises automatically restoring the plurality of widgets to their initial locations according to the basic arrangement information in response to the touch input, the touch input preferably comprising a double tap to a margin region of the standby screen.

12. The method of one of claims 9 to 11,
wherein if the plurality of widgets are displayed according to the basic arrangement information, minimizing the plurality of widgets in response to the touch input, the touch input preferably comprising a double tap to a margin region of the standby screen.

13. The method of one of claims 9 to 12,
further comprising: adding a new widget to or deleting one of the plurality of widgets from the standby screen according to the touch input.

14. The method of one of claims 9 to 13,
wherein changing the current display state comprises enlarging a first widget to provide detailed functions of the first widget in response to the touch input, the touch input preferably comprising a tap made to the first widget.

15. The method of one of claims 9 to 14,
wherein changing the current display state comprises entering a widget manager mode that allows a user to change a setting of a first widget in response to the touch input to the first widget, the touch input preferably comprising a long tap made for a predetermined time to the first widget.
